# EUROPEAN PATENT SPECIFICATION

(11) **EP 0 576 137 B1**
(45) Date of publication and mention of the grant of the patent: **18.11.1998**
(21) Application number: 93303834.1
(22) Date of filing: 18.05.1993
(51) Int. Cl.: B29C 65/00, B29C 53/58, B29C 65/70

(54) **Method of forming bodies comprising a thermoset resin**
Verfahren zur Herstellung von Gegenständen aus vernetzbarem Kunststoff
Procédé pour la fabrication d'objets contenant un polymère thermodurcissable

(30) Priority: 22.05.1992 US 887311; 26.02.1993 GB 9303943
(43) Date of publication of application: 29.12.1993
(73) Proprietor: THE STANDARD PRODUCTS COMPANY, Cleveland Ohio 44102 (US)
(72) Inventor: Keys, James, Frederick, Eaton Ford, St.Neots, Cambridgeshire (GB)
(74) Representative: Nash, David Allan

(56) References cited:
- US-A- 4 680 071
- US-A- 4 818 203
- US-A- 4 946 639

## Description

The present invention relates to a method of forming bodies comprising thermoset polymers and to the product of the method. This invention is especially suitable for forming into a desired shape, a region of a body, or bonding or joining together bodies, such as bodies of extruded elongated strips comprising thermally stable, covalently crosslinked polymers. The present invention especially relates to the forming into a desired shape a region of a crosslinked rubber extrudates such as vulcanized elastomeric weatherstrips and sealing or trim strips and to the joining together of such cross-linked extrudates

Thermoset polymers are characterised by a covalently crosslinked, thermally stable network and are in contrast to thermoplastic polymers which soften and flow under heat and pressure. Thermosetting polymers usually crosslink under heat although some, such as urethanes and epoxy resins may require little or no heat. Thermosetting can occur simultaneously with polymerisation or, as in the case of vulcanised rubbers, after polymerisation. It will be appreciated by those skilled in the art that the present invention is broadly applicable to the class of thermoset polymers, i.e., thermally stable, covalently crosslinked polymeric materials. However, to facilitate understanding of the invention, it is described below in the context of preferred embodiments relating to extruded vulcanised rubber strips used in the automobile industry, such as weatherstrips, trim strips and glass run channel.

Weatherstrips, trim strips, glass run channel and the like are generally made by extruding uncured, i.e., unvulcanised elastomeric materials to form an extrudate which is then vulcanised and cut into suitable lengths. It is often desirable to further form a length of strip after vulcanising to, for example, provide a bend therein. Disadvantages arise, however, when bending already vulcanised materials. It is further often desirable to join such lengths or strips to provide an end to end joint, a T-joint or a corner.

GB-A-2140065 discloses a reinforced sealing strip having a first glass run channel and an inversely disposed flange finisher portion which secures the structure to a window frame of a car door. Sealing strips of this type commonly include a flexible lip extending from the free end of the outer wall of the flange finisher portion. This lip projects over the bodywork of the vehicle door and disguises the region adjacent the flange finisher. However, when the sealing strip is bent to form the desired shape to match the opening in the door, it has been found that the lip distorts badly at the bend as a result of being stretched out of shape. This provides an uneven and unattractive finish at the corners or bends of the shaped sealing strip.

A similar problem has also been found in trunk seals for sports cars, or the like. In such instances a lip is provided in order to disguise spot welds on the bodywork and to provide a gutter for rain water or the like. It has been found that when the seal is bent around the trunk aperture, the lip distorts and moves away from the bodywork at the corner regions. In the past this problem has been overcome by notching the lip away at the corners and remoulding it to the correct shape.

One technique for solving this problem is to employ a combined extrusion and moulding process. Generally speaking, this method involves extruding unvulcanised rubber into a desired profile and vulcanizing the rubber by heating it to effect crosslinking. After the extrudate is vulcanized it is cut to the desired length to prepare it for a moulding step to join it to another length of moulding. For example, for a corner joint, the ends of a pair of extrudates are loaded into a corner mould and unvulcanised rubber is introduced into the mould cavity to form a corner section. The unvulcanised corner material is then heated to vulcanize it and bond it to the already vulcanized extrudate ends. However, this method has the disadvantage of producing a product with unsightly joint lines at the cut ends of the elongated extrudate. Also, the joint obtained by the method is not as strong as the extrudate itself. The joint lines are due to several causes. First, when the ends of the cured extrusions are loaded into the corner mould, the mould must clamp the ends of the extrusions to withstand the cavity pressure of introduced corner material exhibited on the extrusion, therefore preventing the extrusion from being pushed out of the mould. This clamping action on the extrusion causes the extrusion to displace linearly within the extrusion clamping region. Upon mould opening at the end of the corner moulding process, the displaced extrusion relaxes back to its original form due to the elastic memory of the cured rubber. This relaxation takes place unimpeded except at the joint interface between the extrusion and moulded corner where the extrusion size relaxation causes stress and a dimensional step to the moulded material. This dimensional mismatch causes appearance as well as functional, i.e. sealing, problems.

Another cause of unsightly joint lines is due to a difference in gloss. A gloss mismatch exists between the extrudate and the moulded corner. This is due to the dissimilar processes of extrusion and moulding. Because the surfaces are joined together at a distinct line, the gloss mismatch is accentuated and is therefore unattractive from an appearance standpoint.

A third cause of unsightly joint lines is due to difference in colour between the extrudate moulded portions. Colour mismatch is unsightly and even when the same material is used for both the extrudate and moulded portions of the article, variation of the material state of crosslinking can cause an objectionable colour shift.

In the present invention there is a transition zone between vulcanized and unvulcanized rubber. Thus colour and/or gloss mismatches are blended over a zone or area, which blending results in a less noticeable joint. Further, a method of this invention avoids bonding unvulcanized rubber to a cut surface of vulcanized rubber. This method joins pieces of previously crosslinked resin at interfaces of uncrosslinked resin thus joining the pieces together with a strong bond by allowing uncrosslinked polymer chains to bridge the bonded area before being crosslinked. The method also facilitates bending or other forming of an extrudate comprising vulcanized resin.

According to the present invention there is provided a method of forming a thermoset polymeric element, said method comprising the steps of:
(a) providing an element formed of a crosslinkable polymeric material which can be crosslinked to form a thermally stable polymer;
(b) selectively crosslinking said polymeric material constituting the element whereby a first region of the element remains substantially uncrosslinked, this first region being separated from a substantially crosslinked region of the element, by a partially crosslinked transition region;
(c) forming said first region and transition region;
(d) placing said first region and transition region into a mould cavity;
(e) introducing additional uncrosslinked thermosetting material into the mould cavity to contact the first region; and
(f) substantially crosslinking said additional uncrosslinked thermosetting material, said first region and transition region to provide a formed thermoset polymeric element that is substantially free of a visible joint line.

The present invention also relates to the formed thermoset polymeric element made by the method of this invention.

Preferably the polymeric element is an elongate thermoset polymeric element.

The elongate polymeric element which is subjected to the method of the present invention is preferably formed by an extrusion process; such a process, allied to a subsequent curing step, is commonly used for the manufacture of thermoset polymeric components for the automobile industry. Hereafter, for the sake of clarity, we shall refer to the elongate element as an extrudate, although it should be appreciated that the uncrosslinked polymeric element may be prepared by manufacturing processes other than extrusion.

In accordance with a first preferred embodiment of the method of the present invention, an elongated thermoset extrudate is joined to itself or another elongated thermoset extrudate by the following steps to provide a joint or bond which is strong and without a noticeable joint line. First a body of uncrosslinked thermosetting resin is selectively cured to provide a zone of substantially crosslinked thermally stable resin material, a one having a face of substantially uncrosslinked material, and a transition zone therebetween. The face, transition zone and adjacent part is placed in a mould cavity and effectively contacted with another face, transition zone and adjacent part. Uncrosslinked thermosetting material is introduced into the mould to effectively contact the faces. Finally, the material in the mould is crosslinked, for example, by heating.

In accordance with a second preferred embodiment of the present invention the selective curing is within the body of the extrusion, i.e. instead of the uncured region being located at the end or face of the part, it is located with the elongated region. In this way the article can be reformed into a desired curvature, placed into a fixture or mould and uncured and transition regions cured into the desired curvature.

In the second preferred embodiment in which the selective curing is within the body of the extrusion, in the forming step (c), the elongate element may be formed by bending into a desired curvature at the uncrosslinked location and then the uncrosslinked region and the transition region may be formed by moulding and subsequently crosslinked.

In the method of the present invention the selective crosslinking is such that an intermediate location of the extrudate remains substantially uncrosslinked. This permits the partially finished extrudate to be reformed into a desired curvature, placed into a fixture or mould and the uncrosslinked and transition regions cured into the desired shape, for example, by heating. Additional uncrosslinked thermosetting material is introduced into the mould prior to curing to contact the uncrosslinked region of the element and provide additional bulk.

The present method is applicable to a broad range of thermosetting polymers. Such polymers are those which change irreversibly upon heating and are then thermally stable, i.e., are not thermoplastic. Thermosetting polymers may be set or crosslinked when heated, with or without additional "curing" agents or may be crosslinked to a thermoset condition by radiation or chemical reaction. Examples of thermosetting polymers are the phenolic, alkyds, amino resins, unsaturated polyester resins, epoxy resins, silicones, urethane forms, and elastomers such as natural or synthetic rubber. Synthetic rubber includes cis-1,4-polyisoprene, polybutadiene, poly(butadiene-co-styrene) (SBR), poly(butadiene-co-acrylonitrile), poly(isobutylene-co-isoprene), poly(ethylene-co-propylene-co-diene) (EPDM), polychloroprene, polydimethyisiloxane, polyalkylensulfide, polyester or polyether urethanes.

In preferred embodiments of the present invention, the thermoset polymer is a natural or synthetic rubber, such as the synthetic rubber EPDM.

The method of the present invention ensures that there is no noticeable joint line at the reformed region of the finished polymeric element.

It will be appreciated by those skilled in the art that the terms substantially uncrosslinked and substantially crosslinked are used herein to refer to relatively lowly crosslinked polymer and relatively highly crosslinked polymer respectively. The particular percentages of crosslinking will depend upon the particular polymer involved. Relatively lowly crosslinked polymer is a processable material, i.e., extrudable polymer. Relatively highly crosslinked polymer is crosslinked to a state that is stable, i.e., the polymer is suitable for the desired end use.

In a preferred aspect of the present invention, the elongate extrudate is a sealing strip comprising a mounting portion for mounting the strip on a vehicle and a sealing lip which is formed with the mounting portion and extends away therefrom. In the method of manufacture of the strip, the mounting portion is substantially crosslinked whilst at least a part of the lip remains uncrosslinked; a partially crosslinked transition region is also formed between the crosslinked and uncrosslinked regions. The sealing strip is formed into a desired curvature by being bent about a point which coincides with the uncrosslinked part of the lip. Following this forming operation, the uncrosslinked part of the lip is moulded to a desired shape and then subsequently crosslinked. As a result of the invention, the lip can be made to be substantially undistorted at the region of the said bend.

In this preferred aspect of the invention, the mounting portion is preferably channel-shaped having a base and two side walls and is adapted to be received by a flange. The mounting portion is preferably rigid and this rigidity may be provided by a reinforcement member which preferably extends through the base and side walls. Alternatively, the mounting portion could have a flexible core such as wire carrier or lanced steel. The thermoset polymeric material is provided as a coating on the reinforcement member. The mounting portion may have means known per se for securing it to a flange, such as ribs which project from the side walls of the channel towards the base.

The reinforcement member, which may be embedded in the mounting portion, may be solid or apertured and may be made of a metal such as steel or aluminium. Other reinforcements, including ones woven from metal wire are also operable. Alternatively, the mounting portion may consist of a rigid thermoset polymer, such as one which is no softer than 90° Shore A, and preferably no softer than 50° + Shore D and this dispenses with the need for a conventional metal reinforcement member to provide its rigidity. In such an embodiment the lip may be made of a relatively soft thermoset polymer.

In a preferred embodiment, the strip may be used to seal around the window opening of a vehicle door and may include an integral glass run channel, which may be inverted with respect to the mounting portion. One or more sealing lips may be provided which extend from one or both of the side walls in order to seal a pane of glazing material in the channel. The surface of the base on the interior of the channel, and the seals extending from the side walls of the glass run channel preferably have a flock material secured thereto in order to reduce friction with the glass panel.

In the second preferred embodiment of the invention, the uncrosslinked region may be formed to a desired shape by a moulding operation in which the uncrosslinked polymeric material is permitted to soften thereby eliminating distortions which may be created during an earlier bending operation. The softened material will flow to fill the mould. In one embodiment, the mould may take the form of a porous metal block provided with a vacuum system which may pull the region into the desired shape against the mould. The mould may be heated, if necessary, to assist softening of the uncrosslinked region. Different types of mould may be used which allow extensive shaping of the uncrosslinked region to be achieved. For example, the region may be compression moulded to extend it and thereby provide a more aesthetic finish to the finished element. Alternatively, the mould could be provided with means for cutting the region to provide an even finish.

Subsequent curing may be carried out by means of heat (whilst the originally uncrosslinked region is still in the mould or after removing the region from the mould) or by infrared radiation which can be targeted at the relevant region to be crosslinked.

With regard to the selective curing of the element, this may be achieved by various methods. For instance, part of the length of the element may be shielded whilst curing the remainder of the element, for example, by infrared radiation. Selective curing may also be achieved by selectively cooling the part of the element to remain uncrosslinked by, for example, a water mist spray cooling system directed onto that part. Alternatively, the element may be formed of different polymers, at least one of which is susceptible to microwave radiation and at least one other of which is not. On curing the element in microwave ovens, the part of the element not susceptible to microwave radiation remains uncrosslinked. This part can then be reformed and subsequently crosslinked.

The invention will be best understood from the accompanying drawings, taken in conjunction with the accompanying description, and in which:
Figure 1 is a perspective view, broken away, of an automotive vehicle having preferred embodiments of the present invention installed thereon;
Figure 2 is a sectional view, taken along line 2-2 of Figure 1 and showing a glass run channel;
Figure 3 is an enlarged perspective view, partially in section and broken away, of the circle in Figure 1 indicated by the numeral 3 and showing a corner of the glass run channel;
Figure 4 is a sectional view, broken away, taken along line 4-4 in Figure 1 and showing a windshield moulding;
Figure 5 is an enlarged perspective view, partially in section and broken away, of the circle in Figure 1 indicated by the numeral 5 and showing a corner of the windshield moulding;
Figure 6-11 are perspective views, broken away, illustrating steps of a preferred method of the present invention;
Figure 12 is a graph illustrating the selective crosslinking of the present invention;
Figure 13 shows a method of selectively cooling a sealing strip;
Figure 14 shows, in cross-section, a sealing strip formed of two different materials;
Figure 15 shows a cross-section, a sealing strip being moulded;
Figure 16 shows a cross-section of a sealing strip being moulded in an alternative manner;
Figure 17 shows one embodiment of a moulded corner portion of the sealing strip; and
Figure 18 shows a cross-section of a trunk seal in accordance with the prior art.

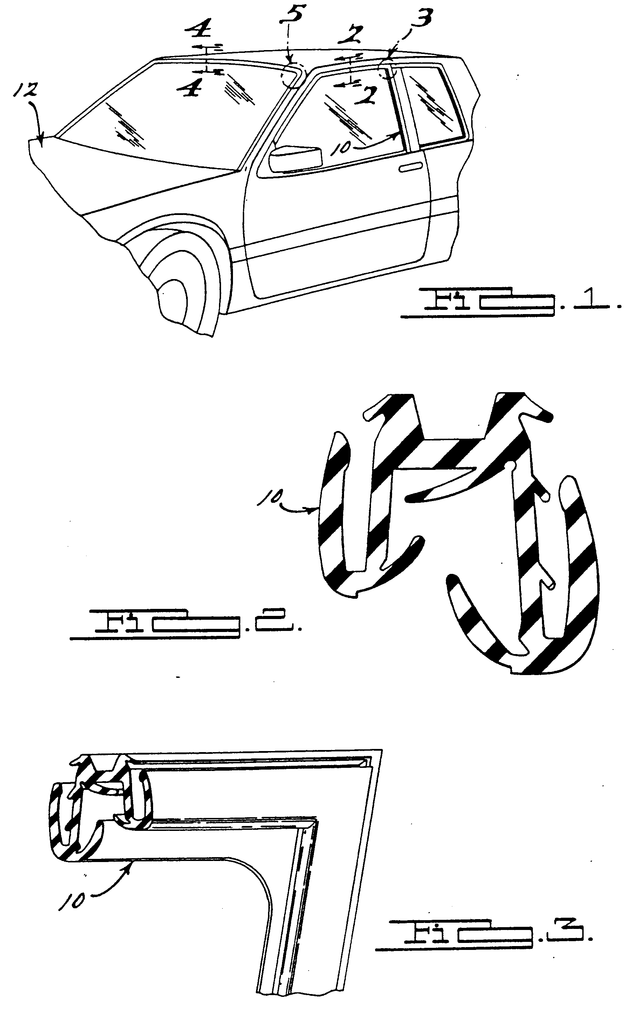

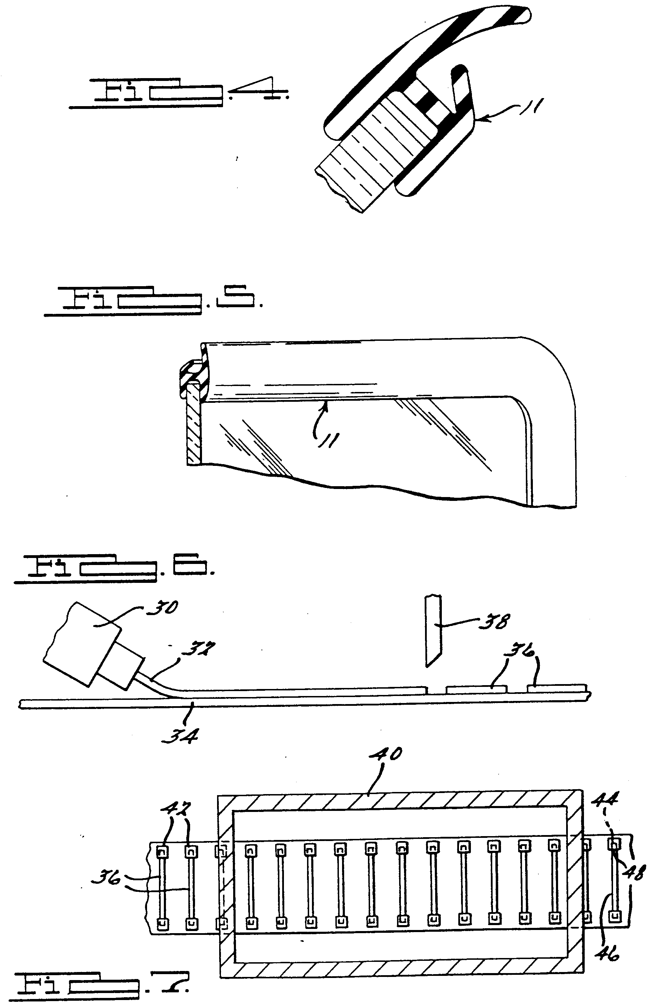

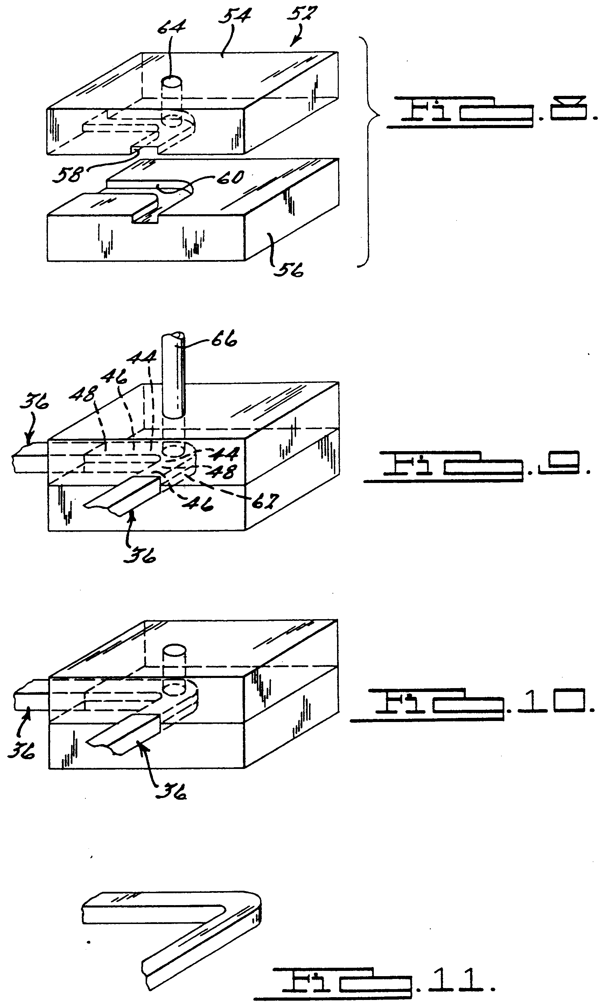

The method of the present invention is particularly advantageous to provide glass run channel for automotive vehicles where such glass run has a corner therein. Thus, preferred embodiments of the present invention are illustrated in Figure 1 as glass run channel 10 and windshield moulding 11 installed on an automotive vehicle 12. Glass run channel 10 has a corner portion 14 and windshield moulding 11 has corner portion 15 made in accordance with a preferred method of the present invention.

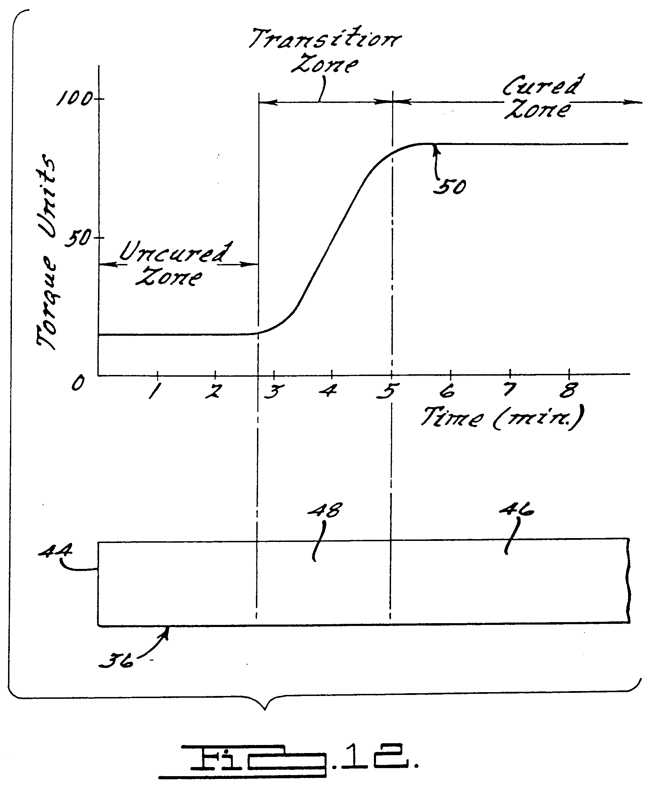

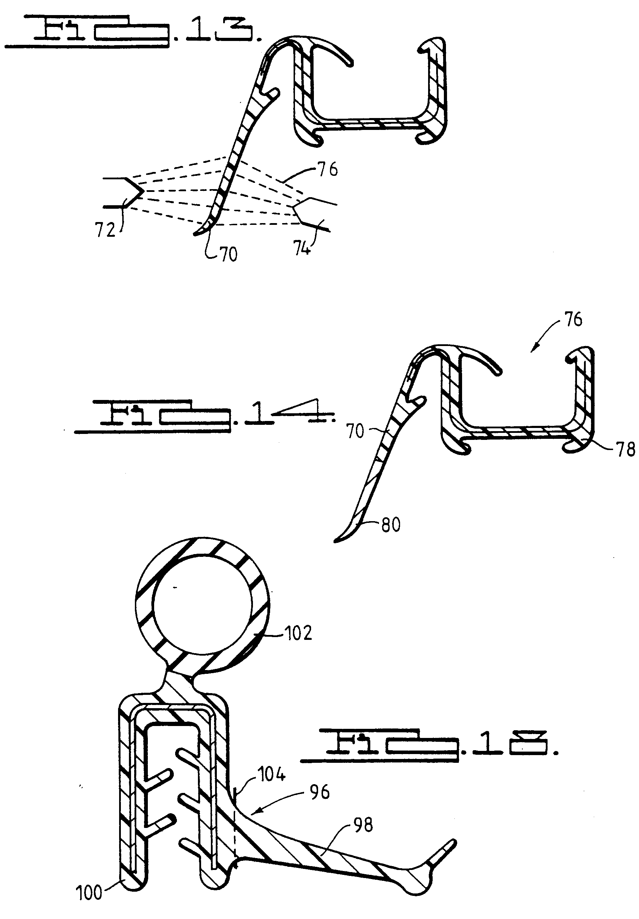

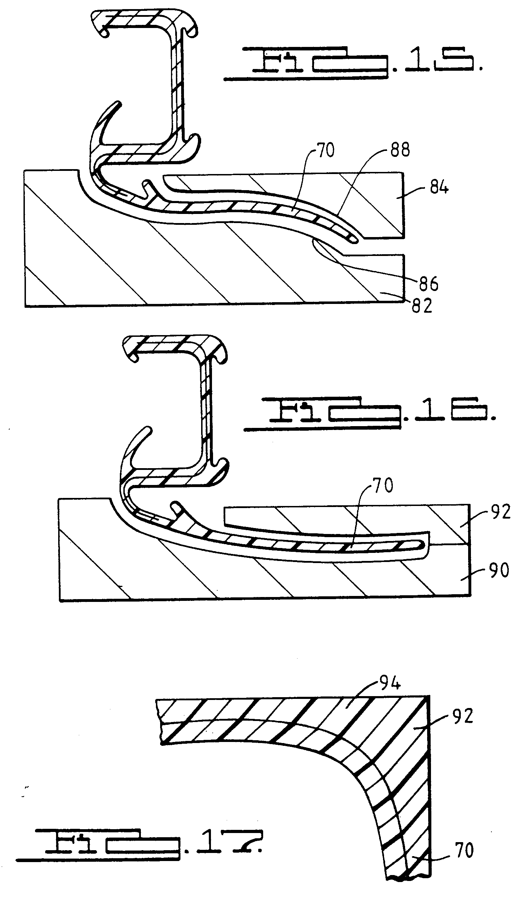

A preferred method of the present invention is well illustrated in Figures 6-11. Referring to Figure 6, a first step is schematically illustrated. Thus, an extruder 30 extrudes uncrosslinked, e.g., EPDM rubber extrudate 32 onto a moving belt 34. Extrudate 32 is cut into lengths 36 by blade 38.

Lengths 36 are bodies of substantially uncrosslinked polymer suitable for later crosslinking to form a thermally stable polymer. As illustrated in Figure 7, lengths 36 are selectively crosslinked, i.e. cured in oven 40. By selective crosslinking or curing is meant that the length is crosslinked or cured in a manner so as to provide a substantially crosslinked zone, a substantially uncrosslinked zone and a transition zone therebetween. Thus, heat insulating shields 42 are placed over the ends of lengths 36 thereby providing at the output of oven 40, lengths 36 with substantially uncrosslinked end faces 44, crosslinked length or body portions 46, and transition zones 48 therebetween.

Further understanding of the term selective curing as used herein can be had by referring to Figures 12. Figure 12 shows a graph which illustrates a common material property of rubber, i.e. a rheometer curve 50. A rheometer curve is obtained by a test performed on a test machine such as the oscillating disk rheometer (ASTMD084) and is generally understood by those involved in the rubber industry as a test to measure the relative curing rate of a rubber material. In this test the material is heated to the vulcanizing temperature (typically between 200 degrees F and 600 degrees F(93°C and 316°C)) under positive pressure in a sealed test chamber which contains an oscillating disk. The oscillating disk is attached to a strain gauge which measures the torque required to rotate the disk while the material is maintained at the curing temperature.

Superimposed over the rheometer there are three zones identified for clarification as: "uncured zone", "transition zone" and "cured zone". These zones are generalized to show three distinct states of matter in the process of vulcanizing rubber or in industry terms to show the state of cure. It is contemplated that the uncured zone is substantially uncrosslinked with the transition zone representing a gradual transition between the uncured and cured zones. In the present invention it will be evident that all three zones or states of matter of an extruded article are employed to produce an extruded product with moulded corners without visible joint lines between the extruded and moulded portions. In the present invention, extrusions are produced in a preparatory step and cut into a unit length. However, at the region of the cut is superimposed a region of uncured zone of rubber. Additionally, adjacent to the uncured zone is material in the transition zone sandwiched between the uncured and cured zones.

Figure 12 also illustrates an extrudate length made in accordance with this step. The state of cure zones have been superimposed from the rheometer graph to illustrate the effect of this selective curing, Thus, extrudate 36 has uncrosslinked zone 44, transition zone 48 and crosslinked body 46.

Referring back to Figure 7, it will become evident to those skilled in the art of rubber extrusion and curing that numerous methods exist which could be utilized to produce a selectively cured rubber extrusion. For example, a cold air jet can be employed to spot cool the uncured zone while the extrudate is curing in a hot air oven. Alternatively, various other methods of selective curing employing heat transfer and energy management can be used such as: microwave suppression, radiation cure, liquid curing media, fluidized bed, evaporative cooling, shielding, insulation, etc. An example is shown in Figure 13, where an apparatus is shown for selectively cooling a lip 70 of a sealing strip to prevent curing thereof whilst the remainder of the sealing strip is crosslinked. The apparatus comprises water dispersing means 72 and 74 which disperse a mist 76 onto lip 70 thereby cooling it, and preventing curing thereof.

Figure 14 shows a sealing strip which may be selectively crosslinked in accordance with the present invention. In this embodiment, the sealing strip 76 comprises two different thermosetting polymeric materials 78 and 80. Polymeric material 78 is curable by microwave radiation and forms the main body of the sealing strip 76. Polymeric material 80 forms the lip 70 and is not curable by microwave radiation. The polymeric material 78 is crosslinked in microwave ovens and thereby leaves the lip 70 formed of polymeric material 80 uncrosslinked in accordance with the invention.

It must be pointed out that while the three state of cure zones are illustrated in Figure 12 with distinct cross-sectional differentiation, forms of the present invention exist in which a cross-sectional slice contains material in two or three forms. In this way only selective regions such as the show surface contain material in the uncured zone. It can also be appreciated that while the illustration depicts an extrusion produced from a single material, alternative constructions will be produced with various combinations of dense and sponge rubber compounds, metals, thermoplastic materials and fabrics utilizing various coatings dependant on application.

After the length 36 is selectively cured to provide uncrosslinked zone 44, transition zone 48 and crosslinked body 46, it is joined to another length 36 in a moulding process to form a corner as illustrated in Figures 8-11.

Referring to Figure 8 an open mould 52 is illustrated. Mould 52 comprises top half 54 and bottom half 56 having channels 58 and 60, respectively, which cooperate to form mould cavity 62. Top half 54 has mould spruce 64 which is in fluid communication with channel 58 and hence mould cavity 62. It will be appreciated that, while mould 52 is suitable for moulding corners, other moulds for other forms or shapes can be used herein as desired. Two end portions of lengths 36 are introduced into channel 60 and mould halves 54 and 56 of mould 50 are closed to capture the end portions in mould cavity 62 as illustrated in Figure 9. When mould 62 closes, all three state of cure zones 44, 46, 48 are compressed in mould cavity 62, however, faces 44 are spaced apart; thus the extrusion volume is displaced by the mismatch between mould and extrusion. Additional uncured rubber 66 is introduced into mould cavity 62 to place faces 44 in effective contracting relationship. Upon introduction of the uncured corner material 66 as shown in Figure 10, an uncured interface exists between the extrudate faces 44 and the corner material 66, therefore forming an unnoticeable joint of the two materials. Additionally, since the introduced corner material pressurizes the uncured zone on the extrudate, any mismatch due to displaced extrusion or thermal shrinkage is transferred to the transition zone where the mismatch is blended away over the length of the zone. Through this same mechanism of blending over the length of the transition zone, both the colour and gloss changes are made in a smooth, gradual "invisible" manner.

In the conventional method the cut end of the cured strip bonds to the uncured corner rubber via diffusion. Very little crosslinking can take place as the cut end is prevulcanized leaving few crosslinking sights available. When the selective curing process is used, the polymer chains are allowed to cross the boundaries of the cured extrudate through to the uncured region. The varying degree of crosslinking prior to moulding allows the uncured rubber and transition region of one strip to crosslink with the uncured and transition region of a second strip.

It should be understood that while the above description deals with material being introduced into the corner mould, simpler variations of selective curing will be used to produce butt joints and mitre with or without the use of additional material or adhesive being introduced into the corner.

As mentioned above, the selective curing may be within the body of the extrusion, i.e. instead of the uncured region being located at the end or face of the part. In this way the article may be formed into its desired curvature without distortions at the bend. Once the article has been selectively cured, it is moulded to the desired shape and the previously uncrosslinked part is crosslinked.

Figure 15 shows an apparatus for moulding the uncrosslinked lip 70 to a desired shape. The apparatus comprises a first mould 82 and a second mould 84. The moulds 82 and 84 shape lip 70 to the required shape and, in the embodiment shown comprise textured surfaces 86 and 88 which impart a pattern onto lip 70 on heating and moulding.

Figure 16 shows an alternative method of moulding in which the heated mould extends lip 70 by means of compression caused by forcing a first mould 90 and second mould 92 towards each other with the lip 70 disposed therebetween, thereby extending the lip 70 without the need to add further rubber material.

This type of moulding apparatus may be particularly useful in forming a sealing strip such as that shown in Figure 17 in which a flag 92 is formed from an extended lip 70 at the corner portion 94 of a B-pillar.

Once the lip 70 has been reformed to its desired shape, it is subsequently crosslinked.

Figure 18 shows an alternative sealing strip 96 known in the art for the sealing of a trunk in a sports car. The strip 96 comprises a lip 98, a mounting portion 100, and a sponge bulb 102 for providing a seal. When the strip is bent to the required shape, distortion of the lip 98 occurs at the corner regions. In order to prevent this, a notch is normally made along line 104 and then the lip 98 is subsequently remoulded to the desired shape. If the process of the present invention is employed in which the lip 98 is left uncured, then moulded, and subsequently cured, the expense associated with the notching and moulding process is avoided.

## Claims

1. A method of forming a thermoset polymeric element, said method comprising the steps of:
(a) providing an element (36) formed of a crosslinkable polymeric material which can be crosslinked to form a thermally stable polymer;
(b) selectively crosslinking said polymeric material constituting the element (36) whereby a first region (44) of the element (36) remains substantially uncrosslinked, this first region (44) being separated from a substantially crosslinked region (46) of the element (36) by a partially crosslinked transition region (48);
(c) forming said first region (44) and transition region (48);
(d) placing said first region (44) and transition region (48) into a mould cavity;
(e) introducing additional uncrosslinked thermosetting material into the mould cavity to contact the first region (44); and
(f) substantially crosslinking said additional uncrosslinked thermosetting material, said first region (44) and transition region (48) to provide a formed thermoset polymeric element that is substantially free of a visible joint line.

2. A method according to claim 1, wherein the polymeric element (36) is formed by an extrusion process.

3. A method according to claim 1 or 2, wherein the selective crosslinking is carried out by selectively heating said element (36).

4. A method according to any preceding claim, wherein the forming step is carried out by compressing said substantially uncrosslinked region (44) and said transition region or regions (48) in a mould cavity (62).

5. A method according to any preceding claim, wherein said substantially uncrosslinked region (44) is disposed between two of said substantially crosslinked regions (46) with one of said transition regions (48) between said substantially uncrosslinked region (44) and each one of said two substantially crosslinked regions (46).

6. A method according to any one of claims 1 to 4, wherein said substantially uncrosslinked region (44) is an end face portion of said element (36), wherein the forming step is carried out by placing said end face in effective contacting relationship with another said face, and wherein the faces are crosslinked into bonding relationship.

7. A method according to any one of claims 1 to 4, wherein the substantially uncrosslinked region (44) is within the body of the said element 36 and wherein, in the forming step (c), the element (36) is formed by bending into a desired curvature at the uncrosslinked region (44) and then the uncrossed linked region (44) and the transition region (48) are formed by moulding and subsequently crosslinked.

8. A method of bonding adjoining faces of polymeric material having a portion which has been previously crosslinked to form a thermally stable polymer comprising the steps of:
(a) providing first and second faces (44) of substantially uncrosslinked polymer, each of said faces (44) having an associated body (46) of resin which has been substantially crosslinked to a thermally stable condition, and there being first and second transition zones (48) between each respective face (44) and body (46) wherein the first and second transition zones are partially crosslinked;
(b) introducing said first and second faces (44) and said first and second transition zones (48) into a mould cavity (62), said faces (44) being placed in the mould cavity in a spaced apart relationship;
(c) introducing additional uncrosslinked thermosetting material into the mould cavity (62) between said faces (44) to effectively contact said faces (44);
(d) substantially crosslinking said additional uncrosslinked thermosetting material, the polymer of said first and second faces (44) and said first and second transition zones (48) to form a connection between said first and second faces that is substantially free of a visible joint line.

9. A method according to claim 8, wherein step (a) is carried out by extruding a polymer and then selectively curing said polymer to provide said faces (44), said transition zones (48), and said body (46).

10. A method according to claim 8 or 9, wherein step (d) is carried out under conditions of heat and pressure.

11. A method according to any one of claims 8 to 10, wherein said faces (44) are end faces of the same elongated extrudate (36), or facing portions of different extrudates (36).

12. A method according to any one of claims 8 to 11, wherein said faces (44) are bonded to form a T-joint.

13. A method according to any one of claims 8 to 12, wherein said faces (44) are placed in abutting relationship in said mould cavity (62).

14. A method according to any preceding claim, wherein said polymer is rubber.

15. A method according to claim 14, wherein said rubber is cis-1,4-polyisoprene, polybutadiene, poly(butadiene-co-styrene), poly(butadiene-co-acrylonitrile), poly(isobutylene-co-isoprene), poly(ethylene-co-propylene-co-diene), polychloroprene, polydimethysiloxane, polyalkylensulphide, polyester or polyether urethanes.

## Patentansprüche

1. Verfahren zum Formen eines Duroplast-Polymerelementes, umfassend die Schritte:
(a) das Bereitstellen eines Elementes (36) aus einem vernetzbaren Polymermaterial, das sich zur Herstellung eines thermostabilen Polymers vernetzen lässt;
(b) das selektive Vernetzen des Polymermaterials, aus dem das Element (36) besteht, wodurch ein erster Bereich (44) des Elementes (36) im Wesentlichen unvernetzt bleibt, wobei dieser erste Bereich (44) durch einen partiell vernetzten Übergangsbereich (48) von einem im Wesentlichen vernetzten Bereich (46) des Elementes (36) getrennt ist;
(c) das Herstellen des ersten Bereiches (44) und des Übergangsbereiches (48);
(d) das Unterbringen des ersten Bereiches (44) und des Übergangsbereiches (48) in einer Hohlform;
(e) das Einbringen weiteren wärmehärtbaren, unvernetzten Materials in die Hohlform, das einen Kontakt zum ersten Bereich (44) herstellt; und
(f) im Wesentlichen Vernetzen des zusätzlichen unvernetzten wärmehärtbaren Materials, des ersten Bereichs (44) und des Übergangsabschnittes (48), wodurch man ein geformtes Duroplast-Polymerelement erhält, das im Wesentlichen keine sichtbaren Verbindungslinien aufweist.

2. Verfahren nach Anspruch 1, wobei das Polymerelement (36) durch ein Extrusionsverfahren hergestellt wird.

3. Verfahren nach Anspruch 1 oder 2, wobei das selektive Vernetzen durch selektives Erwärmen des Elementes (36) erfolgt.

4. Verfahren nach einem vorhergehenden Anspruch, wobei der Formungsschritt erfolgt, indem der im Wesentlichen unvernetzte Bereich (44) und der/die Übergangsbereich oder -bereiche (48) in einer Hohlform (62) zusammengepresst werden.

5. Verfahren nach einem vorhergehenden Anspruch, wobei der im Wesentlichen unvernetzte Bereich (44) zwischen zwei im Wesentlichen vernetzten Bereichen (46) angeordnet ist, und sich einer der Übergangsbereiche (48) zwischen dem im Wesentlichen unvernetzten Bereich (44) und jeweils einem der beiden im Wesentlichen vernetzten Bereiche (46) befindet.

6. Verfahren nach einem der Ansprüche 1 bis 4, wobei der im Wesentlichen unvernetzte Bereich (44) ein Stirnflächenabschnitt des Elementes (36) ist und die Stirnfläche beim Formungsschritt so angeordnet ist, dass sie mit einer weiteren Fläche wirksam in Kontakt steht, und die Flächen so vernetzt sind, dass sie aneinander haften.

7. Verfahren nach einem der Ansprüche 1 bis 4, wobei sich der im Wesentlichen unvernetzte Bereich (44) im Körper des Elementes (36) befindet, welches beim Formungsschritt (c) durch Biegen am unvernetzten Bereich (44) eine gewünschte Krümmung erhält, und dann der unvernetzte Bereich (44) und der Übergangsbereich (48) geformt und anschließend vernetzt werden.

8. Verfahren zum Verbinden aneinandergrenzender Flächen aus Polymermaterial, die einen Abschnitt haben, der vorher zur Erzeugung eines thermostabilen Polymers vernetzt worden ist, umfassend die Schritte:
(a) das Bereitstellen der ersten und zweiten Fläche (44) aus im Wesentlichen unvernetztem Polymer, wobei die Flächen (44) jeweils einen dazugehörigen Harzkörper (46) besitzen, der im Wesentlichen so vernetzt ist, dass er thermostabil ist, und wobei sich jeweils zwischen den entsprechenden Flächen (44) und dem Körper (46) ein erster und zweiter Übergangsbereich (48) befinden, die partiell miteinander vernetzt sind;
(b) das Einbringen der ersten und zweiten Fläche (44) und des ersten und zweiten Übergangsbereiches (48) in eine Hohlform (62), in der die Flächen (44) gesondert vorliegen;
(c) das Einbringen von zusätzlichem unvernetztem wärmehärtbarem Material in die Hohlform (62) zwischen die Flächen (44), so dass es mit diesen wirksam in Kontakt gebracht wird;
(d) im Wesentlichen Vernetzen des zusätzlichen unvernetzten wärmehärtbaren Materials, des Polymers der ersten und zweiten Fläche (44) und des ersten und zweiten Übergangsbereiches (48), wodurch eine Verbindung zwischen der ersten und zweiten Fläche entsteht, die im Wesentlichen keine sichtbare Verbindungslinie aufweist.

9. Verfahren nach Anspruch 8, wobei in Schritt (a) ein Polymer extrudiert wird, das dann selektiv gehärtet wird, so dass die Flächen (44), die Übergangsbereiche (48) und der Körper (46) bereitgestellt werden.

10. Verfahren nach Anspruch 8 oder 9, wobei Schritt (d) unter Wärme- und Druckbedingungen erfolgt.

11. Verfahren nach einem der Ansprüche 8 bis 10, wobei die Flächen (44) Stirnflächen desselben länglichen Extrudates (36) sind oder gegenüberliegende Abschnitte unterschiedlicher Extrudate (36).

12. Verfahren nach einem der Ansprüche 8 bis 11, wobei die Flächen (44) so miteinander verbunden sind, dass sie ein T-Stück bilden.

13. Verfahren nach einem der Ansprüche 8 bis 12, wobei die Flächen (44) so in einer Hohlform (62) angeordnet sind, dass sie aneinanderstoßen.

14. Verfahren nach einem vorhergehenden Anspruch, wobei das Polymer Kautschuk ist.

15. Verfahren nach Anspruch 14, wobei der Kautschuk cis-1,4-Polyisopren, Polybutadien, Poly(butadien-co-styrol), Poly(butadien-co-acrylnitril), Poly(isobutylen-co-isopren), Poly(ethylen-co-propylen-co-dien), Polychloropren, Polydimethylsiloxan, Polyalkylensulfid, Polyester oder Polyetherurethane ist.

## Revendications

1. Procédé de façonnage d'un élément polymère thermodurci, ledit procédé comprenant les étapes de :
(a) la fourniture d'un élément (36) formé d'une matière polymère réticulable qui peut être réticulée pour former un polymère stable thermiquement ;
(b) la réticulation sélective de ladite matière polymère constituant l'élément (36) selon laquelle une première région (44) de l'élément (36) reste essentiellement non réticulée, cette première région (44) étant séparée d'une région essentiellement réticulée (46) de l'élément (36) par une région de transition partiellement réticulée (48) ;
(c) le façonnage desdites première région (44) et région de transition (48) ;
(d) le positionnement desdites première région (44) et région de transition (48) dans une cavité de moule ;
(e) l'introduction d'une matière thermodurcissable non réticulée supplémentaire dans la cavité de moule pour entrer en contact avec la première région (44) ; et
(f) essentiellement la réticulation de ladite matière thermodurcissable non réticulée supplémentaire, desdites première région (44) et région de transition (48) pour fournir un élément polymère thermodurci façonné qui est essentiellement exempt d'une ligne de joint visible.

2. Procédé selon la revendication 1, caractérisé en ce que l'élément polymère (36) est façonné par un procédé d'extrusion.

3. Procédé selon la revendication 1 ou 2, caractérisé en ce que la réticulation sélective est effectuée en chauffant sélectivement ledit élément (36).

4. Procédé selon l'une des revendications précédentes, caractérisé en ce que l'étape de façonnage est effectuée par compression de ladite région essentiellement non réticulée (44) et de ladite ou desdites régions de transition (48) dans une cavité (62) de moule.

5. Procédé selon l'une des revendications précédentes, caractérisé en ce que ladite région essentiellement non réticulée (44) est disposée entre deux desdites régions essentiellement réticulées (46) avec une desdites régions de transition (48) entre ladite région essentiellement non réticulée (44) et chacune desdites deux régions sensiblement réticulées (46).

6. Procédé selon l'une des revendications 1 à 4, caractérisé en ce que ladite région essentiellement non réticulée (44) est une partie de face d'extrémité dudit élément (36), l'étape de façonnage étant effectuée en plaçant ladite face d'extrémité en relation d'assemblage effectivement avec une autre face d'extrémité, et en ce que les faces sont réticulées en relation de liaison.

7. Procédé selon l'une des revendications 1 à 4, caractérisé en ce que la région essentiellement non réticulée (44) est à l'intérieur du corps dudit élément (36) et en ce que, pendant l'étape de façonnage (c), l'élément (36) est façonné par flexion selon une courbure désirée de la région non réticulée (44) et ensuite la région reliée non réticulée (44) et la région de transition (48) sont façonnées par moulage et réticulées postérieurement.

8. Procédé d'assemblage de faces jointives d'une matière polymère ayant une partie qui a été préalablement réticulée pour former un polymère stable thermiquement comprenant les étapes de :
(a) la fourniture d'une première et seconde faces (44) d'un polymère essentiellement non réticulé, chacune desdites faces (44) ayant un corps associé (46) de résine qui a été essentiellement réticulé en une condition stable thermiquement, et une première et seconde zones de transition (48) existant entre chaque face (44) et corps (46) respectifs, la première et seconde zones de transition étant partiellement réticulées ;
(b) l'introduction desdites première et seconde faces (44) et desdites première et seconde zones de transition (48) dans une cavité (62) d'un moule, lesdites faces (44) étant placées dans la cavité du moule selon une relation espacée ;
(c) l'introduction d'une matière thermodurcissable non réticulée supplémentaire dans la cavité (62) du moule entre lesdites faces (44) pour être en contact effectivement avec lesdites faces (44) ;
(d) essentiellement la réticulation de ladite matière thermodurcissable non réticulée, le polymère desdites première et seconde faces (44) et desdites première et seconde zones de transition (48) pour former une liaison entre lesdites première et seconde faces qui est sensiblement exempte d'une ligne de joint visible.

9. Procédé selon la revendication 8, caractérisé en ce qu'on effectue l'étape (a) en extrudant un polymère et ensuite en durcissant sélectivement ledit polymère pour fournir lesdites faces (44), lesdites zones de transition (48) et ledit corps (46).

10. Procédé selon la revendication 8 ou 9, caractérisé en ce que l'étape (d) est effectuée sous des conditions de chaleur et de pression.

11. Procédé selon l'une des revendications 8 à 10, caractérisé en ce que lesdites faces (44) sont des faces d'extrémité du même produit extrudé (46) allongé, ou des parties face à face de produits extrudés différents (36).

12. Procédé selon l'une des revendications 8 à 11, caractérisé en ce que lesdites faces (44) sont reliées pour former un joint en T.

13. Procédé selon l'une des revendications 8 à 12, caractérisé en ce que lesdites faces (44) sont placées en relation de butée dans ladite cavité (62) de moule.

14. Procédé selon l'une des revendications précédentes, caractérisé en ce que ledit polymère est du caoutchouc.

15. Procédé selon la revendication 14, caractérisé en ce que ledit caoutchouc et le cis-1,4-polyisoprène, le polybutadiène, le copoly(butadiène-styrène), le copoly(butadiène-acrylonitrile), le copoly(isobutylène-isoprène), le copoly(éthylène-propylène-diène), le polychloroprène, le polydiméthylsiloxane, le poly(sulfure d'alkylène), un polyester ou des polyéthers uréthanes.
